# EUROPÄISCHE PATENTSCHRIFT

(11) **EP 2 626 125 B1**
(45) Veröffentlichungstag und Bekanntmachung des Hinweises auf die Patenterteilung: **13.07.2016**
(21) Anmeldenummer: 12000877.6
(22) Anmeldetag: 10.02.2012
(51) Int. Cl.: B01D 53/26

(54) **Vorrichtung zur Trocknung und Filterung eines Gases**
Device for drying and filtering a gas
Dispositif de séchage et de filtration d'un gaz

(43) Veröffentlichungstag der Anmeldung: 14.08.2013
(73) Patentinhaber: Donaldson Filtration Deutschland GmbH, 42781 Haan (DE)
(72) Erfinder: Rbayti, Abdelkhalic, 40477 Düsseldorf (DE); Schäfer, Jens, 41352 Korschenbroich (DE)
(74) Vertreter: Tilmann, Max Wilhelm

(56) Entgegenhaltungen:
- EP-A1- 0 490 632
- DE-A1- 2 111 942
- DE-A1-102009 005 156
- US-A- 3 555 787
- US-A- 4 604 110
- US-A- 6 027 548

## Beschreibung

Die Erfindung betrifft eine Vorrichtung zur Trocknung eines Gases und insbesondere einen Sorptionstrockner mit einer nachgeschalteten Aktivkohlefiltereinheit.

Sorptionstrockner dienen im Allgemeinen dazu, Feuchtigkeit aus einem Gas und insbesondere einem komprimierten Gas, wie z.B. Druckluft, zu entfernen. Bei der Erzeugung von Druckluft saugt ein Kompressor Umgebungsluft an und verdichtet diese. Die Verdichtung der angesaugten Umgebungsluft führt zu einer Feuchtigkeitsübersättigung der komprimierten Luft. Ein Teil dieser Feuchtigkeit kondensiert in einem Nachkühler des Kompressors aus und wird über Abscheidesysteme aus dem Druckluftsystem abgeleitet. Die Abkühlung der Druckluft im Rohrleitungssystem zwischen dem Kompressor und dem Verbraucher hat eine weitere Bildung von Kondensat zur Folge. Dies kann in der nachfolgenden Verwendung der Druckluft zu negativen Begleiterscheinungen führen, die einen hohen Wartungsaufwand oder Qualitätseinbußen begründen können. Anwendungen, die hohe Anforderung an die Reinheit der Druckluft stellen, wie beispielsweise Anwendungen in der Lebensmittelindustrie, der Pharmaindustrie oder in der Halbleitertechnik, erfordern daher häufig zusätzliche Anlagen zur Trocknung der komprimierten Luft, die in der Regel zwischen dem Nachkühler des Kompressors und dem Verbrauchernetz in das Druckluftsystem integriert sind. Diese Trocknungsanlagen dienen dazu, die komprimierte Luft nahezu feuchtigkeitsfrei in das Druckluftsystem einzuspeisen.

Bekannte Sorptionstrockner weisen in der Regel zwei Behälter auf, in denen Trockenmittel (Sorbens) - häufig in Form einer Schüttung des granulatförmigen Trockenmit tels - angeordnet ist. Häufig kommen adsorptive Trockenmittel zum Einsatz, wobei auch absorptive Trockenmittel verwendet werden können. Die beiden Behälter sind durch Leitungen parallel miteinander und jeweils mit dem Einlass des zu trocknenden Gases und dem Auslass des getrockneten Gases verbunden. Der Strömungsweg des Gases wird über Ventile gesteuert. Die Steuerung der Ventile übernimmt eine Steuereinheit. Die Steuerung der Ventile ist dabei so ausgelegt, dass stets ein Behälter von dem zu trocknenden Gas durchströmt wird. In diesem wird das Gas getrocknet, indem die darin enthaltene Feuchtigkeit von dem in dem Behälter enthaltenen Trockenmittel gebunden wird. In dieser Phase befindet sich dieser Behälter somit in einer Sorptions- oder Trockenphase. Während der Sorptionsphase des einen Behälters wird der andere Behälter (in der Regel) in entgegengesetzter Richtung von einem Teil des getrockneten Gases durchströmt, um das während einer vorherigen Sorptionsphase gesättigte Sorbens zu trocknen, d.h. zu regenerieren. Dieser Behälter befindet sich dabei folglich in der Regenerationsphase. Wenn das Sorbens ohne externe Zufuhr von Wärmeenergie, d.h. lediglich durch einen Teilstrom des vorab getrockneten Gases getrocknet wird, handelt es sich um eine so genannte kalte Regeneration. Nach einer vorgegebenen, von der Belastung des Sorptionstrockners abhängigen Zeitspanne, ist es erforderlich, die Ventile in den Zu- und Ableitungen so umzusteuem, dass derjenige Behälter, der sich bislang in der Sorptionsphase befand, regeneriert wird und der Behälter, der vorher regeneriert wurde, nunmehr zur Trocknung des Gases verwendet wird.

Aus dem Stand der Technik ist zudem die warme Regeneration eines Sorbtionstrockners bekannt. Hierbei wird der sich in der Regenerationsphase befindliche Sorptionsbehälter durch Luft regeneriert, die durch Zufuhr externer Energie aufgeheizt wurde. Bei der Luft kann es sich entweder um einen Teilstrom der getrockneten Druckluft handeln oder es kann z.B. auch Umgebungsluft verwendet werden. Zum Aufheizen der Regenerationsluft im Zusammenhang mit der warmen Regeneration werden regelmäßig elektrische Heizvorrichtungen eingesetzt.

Weiterhin ist es bekannt, derartigen Sorptionstrocknem oder anderen Trocknungsanlagen weitere mit verschiedenen Adsorptionsmitteln oder Katalysatoren wie z.B. Aktivkohle gefüllte Reinigerstufe nachzuschalten, der weitere unerwünschte Bestandteile des getrockneten Gases, wie beispielsweise Öldampf, herausfiltert.

Bei der Wartung derartiger, um einen solche Reinigerstufe ergänzte Trocknungsanlagen hat es sich als problematisch gezeigt, dass nach einem Austausch des Adsorbens oder Katalysators eine lange Wiederanfahrphase erforderlich ist, in der die Trocknungsanlage nicht in der Lage ist, den spezifizierten Trocknungsgrad des Gases bereitzustellen. Dies liegt insbesondere daran, dass das Austauschadsorbens oder der -katalysator mit einer gewissen Eigenfeuchte beladen ist, die zunächst mittels der von dem Sorptionstrockner getrockneten Druckluft abgeführt werden muss, wodurch der Trocknungsgrad der zuvor aufwändig getrockneten Druckluft wieder verringert wird. Es ist somit erforderlich, die gesamte Anlage eine gewisse Zeit in Betrieb zu nehmen, um die Reinigerstufe zu trocknen. Dies ist nicht nur mit einer entsprechend langen Leerlaufzeit der Trocknungsanlage, in der diese nicht für den vorgesehenen Zweck zur Verfügung steht, sondern auch mit einem erheblichen Energieverlust verbunden.

Aus US 3,555,787 ist eine Vorrichtung zur Trocknung eines Gases bekannt, die drei in Strömungsrichtung hintereinander geschaltete Filtereinheiten aufweist. Die in Strömungsrichtung vorderste Filtereinheit enthält zwei Filterelemente, die durch eine Lage aus Glasfasern voneinander getrennt sind. Das eine Filterelement ist ein Trockenmittelbett. Das andere Filterelement ist ein Molekularsieb, das Schwefelwasserstoffmoleküle und Schwefeldioxidmoleküle adsorbiert. Die dieser Filtereinheit in Strömungsrichtung nachgeschaltete, zweite Filtereinheit weist ein oberes und ein unteres Glasfaserpad auf sowie zwei zwischen diesen Glasfaserpads angeordnete Trockenmittelbette, die wiederum durch ein (drittes) Glasfaserpad voneinander getrennt werden. Die in Strömungsrichtung letzte, der vorgenannten Filtereinheit nachgeschaltete, dritte Filtereinheit weist ein zweistufiges Bett auf, das in einer ersten Stufe ein Filterelement mit einem "Puralfil"-Filter aufweist, der durch Regeneration von imprägnierten, aktiven Aluminiumoxid mit Kaliumpermanganat in wässriger Lösung hergestellt wird. Als zweite Stufe ist eine Mehrzahl von Filterelementen vorgesehen, die Festpartikel der Größenordnung von zwei Angstroem oder größer aus dem Gas filtern.

Aus EP 0 490 632 A1 ist das Hintereinanderschalten eines Koaleszenzfilters und eines Reinigungsbehälters bekannt, wobei der Reinigungsbehälter dem Koaleszenzfilter in Strömungsrichtung nachgeschaltet ist. Der Reinigungsbehälter besteht aus einer ersten Adsorptionslage, die dem Gas Wasserdampf entzieht, einer zweiten Adsorptionslage, die dem (getrockneten) Gas Öldampf entzieht und einer dritten Adsorptionslage, in der das getrocknete, ölfreie Gas Wasserdampf aufnimmt, um die dritte Adsorptionslage zu regenerieren.

Aus US6,027,548 ist eine Vorrichtung mit einer Vorbehandlungszone (pretreatment zon 1), die zum Entfernen unerwünschter Beladungen eines Gasstroms, nämlich von Wasser und Kohlendioxid vorgesehen ist, und einem nachgeschalteten Mischbett aus 13X (Na X (2.5)) und LiX (2.0). bekannt.

Ausgehend von diesem Stand der Technik lag der Erfindung die Aufgabe zugrunde, eine verbesserte Vorrichtung zur Trocknung eines Gases anzugeben. Insbesondere sollte durch die Erfindung das Problem der teilweise sehr langen Wiederanfahrphase nach dem Auswechseln einer dem Trockner der Vorrichtung nachgeschalteten-Reinigerstufe verringert werden.

Diese Aufgabe wird durch den Gegenstand des unabhängigen Patentanspruchs 1 gelöst. Vorteilhafte Ausführungsformen der erfindungsgemäßen Vorrichtung sind Gegenstand der abhängigen Patentansprüche und ergeben sich aus der nachfolgenden Beschreibung der Erfindung.

Der Kern der Erfindung liegt darin, bei einer Vorrichtung zur Trocknung eines Gases (und insbesondere von Druckluft), bei der einer (ersten) Trocknereinheit eine Reinigerstufe in Strömungsrichtung des Gases nachgeschaltet ist, in der Reinigerstufe das Gas einer zweiten Trocknereinheit zuzuführen, um beispielsweise nach einem Austausch die in dieser ausgetauschten Reinigerstufe enthaltene Eigenfeuchte aufzunehmen. Dadurch kann - bei einer geeigneten Auslegung - auch nach einem Service bei neu eingesetztem Adsorbens- oder Katalysator unmittelbar oder bereits nach einer kurzen Wiederanfahrphase der spezifizierte und von der ersten Trocknereinheit auch gewährleistete Trocknungsgrad für das Gas erreicht werden.

Die Trocknereinheit ist dabei als Mischbett direkt in die Reinigerstufe integriert werden.

Die Erfindung sieht eine Vorrichtung zur Trocknung eines Gases mit ersten Mitteln zum Trocknen des Gases, denen das Gas zur Trocknung zugeführt wird und Mitteln zur Reinigung des Gases, denen das Gas zur Reinigung zugeführt wird, vor, bei der zweite Mittel zum Trocknen so angeordnet sind, dass sie die Mittel zum Reinigen des Gases trocknen.

In einer bevorzugten Ausführungsform wird das Gas zuerst den ersten Mitteln zum Trocknen des Gases zugeführt und dann den Mitteln zur Reinigung des Gases.

Die Erfindung kann durch die Ausbildung einer Vorrichtung zur Trocknung eines Gases mit einer ersten Trocknereinheit sowie einer der ersten Trocknereinheit in Strömungsrichtung des Gases nachgeschalteten Reinigungsstufe realisiert werden, bei der die Reinigerstufe eine zweite Trocknereinheit aufweist.
In einer bevorzugten Ausführungsform der erfindungsgemäßen Vorrichtung kann vorgesehen sein, dass die erste Trocknereinheit mindestens einen Behälter mit einem hygroskopischen Trockenmittel (Sorbens) umfasst. Das Trockenmittel kann in dem Behälter beispielsweise granulatförmig in Form einer (gegebenenfalls verdichteten) Schüttung vorliegen. Als erste Trockeneinheit kann jedoch auch ein Kältetrockner eingesetzt werden.

Auch die zweite Trocknereinheit umfasst vorzugsweise ein hygroskopisches Trockenmittel (Sorbens). Dieses kann beispielsweise ebenfalls granulatförmig und in Form einer (gegebenenfalls verdichteten) Schüttung vorliegen.

Selbstverständlich sind für die erste und/oder zweite Trocknereinheit auch beliebige andere bekannte Trocknerbauweisen einsetzbar.

Für die zweite Trocknereinheit wird vorzugsweise ein Trockenmittel gewähl. das auch bei einem relativ geringen (relativen) Feuchtigkeitsgrad (z.B. <20%) des Gases eine ausreichende Wasseraufnahmekapazität aufweist. Hierfür eignet sich beispielsweise Molekularsieb und insbesondere solches mit einer Porengröße zwischen 4 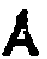 und 10 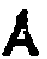 , wobei auch andere Porengrößen oder Trockenmittel zum Einsatz kommen können. Weniger geeignete Trockenmittel können Silica Gel-Produkte oder Aluminiumoxid sein, wobei deren Einsatz auch nicht ausgeschlossen ist. Grundsätzlich eignet sich als Trockenmittel jedes Mittel, dass die Anforderungen an die Luftqualität (Taupunkt) erreichen kann.

Besonders bevorzugt ist vorgesehen, dass die Trocknereinheit mindestens zwei Trockenmittelbehälter umfasst, die wechselweise zur Trocknung des Gases herangezogen werden, indem die Trockenmittelbehälter jeweils über geeignete Rohrleitungen mit einem Gaseinlass der Vorrichtung sowie einer Zuführleitung zur Reinigerstufe verbunden sind, wobei die Verbindung der einzelnen Trockenmittelbehälter zu dem Gaseinlass bzw. der Zufühneitung bedarfsweise unterbrochen werden können. Hierzu können entsprechende Ventile und eine geeignete Steuerungsvorrichtung vorgesehen sein. Dies ermöglicht, die erste Trocknereinheit durch eine wechselweise Verwendung der einzelnen Trockenmittelbehälter quasi kontinuierlich zu betreiben; d.h. zumindest einer der Trockenmittelbehälter trocknet das Gas, während zumindest ein anderer regeneriert wird.

Vorzugsweise kann vorgesehen sein, dass das Adsorbens oder der Katalysator, die ebenfalls granulatförmig und beispielsweise in Form einer (gegebenenfalls verdichteten) Schüttung vorgesehen sein kann, und die zweite Trocknereinheit in einen Behälter integriert sind. Dadurch kann eine Einheit geschaffen werden, die beim Erreichen der Sättigungsgrenze einfach ausgetauscht werden kann. Ein Austausch der zweiten Trocknereinheit gemeinsam mit der Reinigerstufe kann sinnvoll sein, da diesef häufig - in Abhängigkelt von der jeweiligen Auslegung und der Verwendung der Vorrichtung - durch die Aufnahme der Eigenfeuchte des Adsorbens oder des Katalysators beladen wird und in Folge der dauerhaft herrschenden hohen Drücke von dem diesen durchströmenden getrockneten Gas nicht (vollständig) regeneriert wird.

Bei der erfindungsgemäßen Vorrichtung ist vorgesehen, dass das Volumenverhältnis der Aktivkohle des Aktivkohlefilters zu dem Trockenmittel der zweiten Trockenmitteleinheit mindestens 4:1, vorzugsweise mindestens 3:1 und besonders bevorzugt bis zu mindestens 2:1 beträgt. Insbesondere wird ein Volumenverhältnis von Adsorptionsmittel bzw. Katalysator zum Trockenmittel in einem bestimmten Verhältnis gewählt. so dass sich die Einfahrzelt auf ein Minimum reduziert.

Durch eine Erhöhung des Trockenmittelsanteils im Verhältnis reduziert sich in der Regel die Wiederanfahrzeit der Vorrichtung. Nun ist mit dem zusätzlichen Anteil an Trockenmittel aber auch ein gewisser Druckabfall verbunden, der grundsätzlich nachteilig ist. Es ist daher nicht sinnvoll, den Trockenmittelanteil beliebig hoch anzusetzen; vielmehr sollte nur so viel Trockenmittel zum Einsatz kommen, dass gerade die gewünschte Wiederanfahrzeit erreicht werden kann.

Die Erfindung wird nachfolgend anhand eines in der Zeichnung dargestellten Ausführungsbeispiels näher erläutert. In den Zeichnungen zeigt:

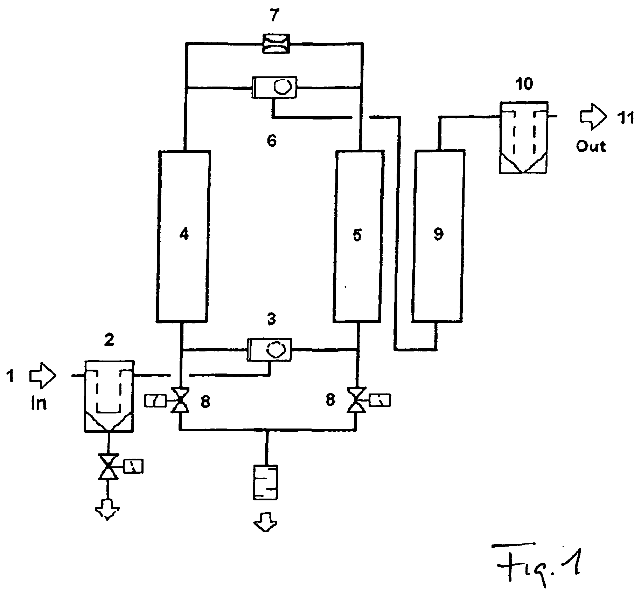

Fig. 1: eine schematische Darstellung einer erfindungsgemäßen Vorrichtung zur Trocknung und Filterung von Druckluft.

Die Figur 1 zeigt in einer schematischen Darstellung eine erfindungsgemäße Vorrichtung zur Trocknung und Filterung von Druckluft.

Zur Trocknung der Druckluft umfasst die Vorrichtung zwei Trockenmittelbehälter 4, 5, die jeweils mit einem handelsüblichen Adsorbens (nicht dargestellt) befüllt sind. Beide Trockenmittelbehälter 4, 5 sind über ein erstes Wechselventil 3 mit einem Einlass 1 für Druckluft, die von einem nicht dargestellten Kompressor zugeführt wird, verbunden. Zwischen dem Einlass 1 für die Druckluft und dem ersten Wechselventil 3 ist ein Kondensat-Vorfilter 2 vorgesehen, der noch mit einem Wärmetauscher kombiniert werden kann und über den das aus der komprimierten und sich abkühlenden Druckluft fällende Kondensat abgeführt wird. Der Auslass der beiden Trockenmittelbehälter 4, 5 ist - wiederum Ober ein (zweites) Wechselventil 6 - mit einer Zuführteitung verbunden, über die die getrocknete Druckluft zu einer Filtereinheit 9 geführt wird. Diese Filtereinheit 9 umfasst in einer nicht zur Erfindung gehörenden Ausuhrungsform eine Reinigerstufe, der aus einer Schicht granulatförmigem Adsorbens z.B. Aktivkohle oder einem Katalysator z.B. Hopkalit (nicht dargestellt) und - in Strömungsrichtung dahinter - einer (zweiten) Trocknereinheit in Form einer Schicht eines Trockenmittels (Adsorbens - nicht dargestellt)) besteht. In einer zur Erfindung gehörenden, nicht dargestellten alternativen Ausführungsform sind die granulatförmige Aktivkohle und das Trockenmittel der zweiten Trocknereinheit als Mischbett innerhalb eines Behälters vorgesehen sein. Der Auslass der Filtereinheit 9 ist Ober einen zusätzlichen Nachfilter 10 mit einem Auslass 11 verbunden, an den Verbraucher (nicht dargestellt) für die Druckluft angeschlossen werden können.

Die Parallelschaltung der beiden Trockenmittelbehälter 4, 5 über die beiden Wechselventile 3, 6 sowie zusätzlich über ein Drosselventil 7 ermöglicht, jeweils einen der Trockenmittelbehälter 4, 5 zur Trocknung der von dem Kompressor kommenden Druckluft zu verwenden, während der andere regeneriert wird. Hierzu wird beispielsweise die Druckluft über das erste Wechselventil 3 dem linken Trockenmittelbehälter 4 zugeführt, den es von unten nach oben durchströmt, und dann - zu einem Großteil - über das zweite Wechselventil 6 der Filtereinheit 9 zugeführt. Ein Teil der aus dem linken Trockenmittelbehälter 4 strömenden, getrockneten Druckluft wird zudem über das Drosselventil 7 dem rechten, für die Regeneration vorgesehenen Trockenmittelbehälter 5 zugeleitet, um diesen zu regenerieren, wobei dieser von oben nach unten durchströmt wird. Die zur Regeneration herangezogene Druckluft wird dann über ein Magnetventil 8 in die Umgebung ausgeblasen.

Durch eine entsprechende Umsteuerung der Wechselventile 3, 6 können die beiden Trockenmittelbehälter umgeschaltet werden, so dass dann der rechte Trockenmittelbehälter 5 die Druckluft trocknet, während der linke Trockenmittelbehälter 4 regeneriert wird.

Bei einer hinsichtlich des Aufbaus und des Funktionsprinzips der Vorrichtung gemäß Fig. 1 im Wesentlichen entsprechenden Trocknungsanlage, konkret einer Aufbereitungsanlage vom Typ Oilfreepac der Donaldson Filtration Deutschland GmbH, Haan, Deutschland, wurde der den Trockenmittelbehältern nachgeschaltete Aktivkohlfilter erfindungsgemäß durch eine Schicht eines Trockenmittels ergänzt und alternativ durch der Aktivkohle beigemischtes Trockenmittel (Mischbett). Dann wurde gemessen, welche Zeit (t) für das Wiederanfahren der Anlage nach dem Einsetzen eines neuen, zuvor der Umgebungsluft ausgesetzten Aktivkohlefilters vergeht, bis der für die Anlage vorgesehene (Druck-)Taupunkt (DTP) von z. B. -40°C erreicht wird, wobei dieser Test mit unterschiedlichen Volumenverhältnissen der Aktivkohle zu dem des Trockenmittels 361012014012408

durchgeführt wurde. In der nachfolgenden Tabelle werden beispielhaft einige Testergebnisse wiedergegeben.

| Trockenmittel [Vol. %] | t -40°C DTP in Minuten |
|---|---|
| 0 | < 500 |
| 10 | 500 - 1500 |
| 25 | 50 -150 |
| > 30 | 0 - 50 |

Aus der Tabelle ergibt sich ohne weiteres, dass durch die erfindungsgemäße Ausgestaltung einer Vorrichtung zum Trocknen und Filtern von Druckluft, die Zeit, die zum Wiederanfahren der Vorrichtung nach dem Austausch des Aktivkohlefilters erforderlich ist, erheblich oder sogar bis auf Null reduziert werden kann.

Es zeigt sich aber auch, dass durch die erfindungsgemäße Nachschaltung einer zweiten Trocknereinheit nicht immer eine verringerte Wiederanfahrzeit erreicht werden kann, sondern dem konkreten Mengenverhältnis von Aktivkohle zu Trockenmittel (der zweiten Trocknereinheit) eine wesentliche Bedeutung zukommt. Die Menge des vorzugsweise im Verhältnis zur Menge der Aktivkohle einzusetzenden Trockenmittels hängt - neben der Höhe der Eigenbeladung der Aktivkohle - insbesondere von der Höhe des Soll-(Druck-)Taupunkts für die zu erzeugende Druckluft ab.

Beispielsweise zeigt sich, dass aus dem Einsatz von nur 10 Vol.% Trockenmittel keine Verkürzung sondern vielmehr eine signifikante Verlängerung der Wiederanfahrzeit resultiert. Dies lässt sich damit erklären, dass die (Trocknungs-)Kapazität von so wenig Trockenmittel nicht ausreicht, um genug der Feuchtigkeit, mit der der Aktivkohlefilter nach dem Einsetzen beladen ist, aufzunehmen und zwischenzuspeichern. Im Ergebnis fungiert das Trockenmittel als "zu schwacher Puffer", so dass nach relativ kurzer Zeit wieder relativ viel Feuchtigkeit von dem Trockenmittel an die Druckluft abgegeben wird, was zu einem nicht ausreichenden Trocknungsgrad der Druckluft führt. Das Trocken-mittel der zweiten Trocknereinheit "verschleppt" somit in diesem Fall die Abfuhr der Feuchtigkeit, mit der die Aktivkohle nach dem Austauschen beladen ist.

Auch bei dem Einsatz eines höheren Anteils an Trockenmittel fungiert dieses als "Puffer" für die Eigenbeladung der Aktivkohle. Durch die höhere (Trocknungs-)Kapazität kann jedoch eine Reduzierung der Wiederanfahrzeit erreicht werden, weil das Trockenmittel zu Beginn des Wiederanfahrens die hohe Eigenbeladung zu einem großen Teil oder vollständig aufnimmt und diese erst später, wenn diese von sehr trockener, von der Trocknereinheit kommender Druckluft durchströmt wird, wieder (teilweise) abgibt. Wegen des hohen Trockenmittelanteils erfolgt diese Abgabe jedoch nur sehr langsam, so dass gegebenenfalls trotzdem der erforderliche Trocknungsgrad der Druckluft nicht unterschritten wird und somit keine oder nur eine sehr geringe Wiederanfahrzeit erforderlich ist.

Die hier gezeigten und kommentierten Ergebnisse sind beispielhaft für eine von vielen möglichen Parameter-Kombinationen aus den Haupteinflussfaktoren 1. Wassergehalt der Kohle, 2. verwendeter Trockenmitteltyp 3. Anteil des Trockenmittels im Verhältnis zur Aktivkohle und angestrebter (Druck-)Taupunkt.

## Patentansprüche

1. Vorrichtung zur Trocknung eines Gases mit
- ersten Mitteln zum Trocknen des Gases, denen das Gas zur Trocknung zugeführt wird, und
- Mitteln zur Reinigung des Gases, denen das Gas zur Reinigung zugeführt wird, und
- zweiten Mitteln zum Trocknen, die so angeordnet sind, dass sie die Mittel zum Reinigen des Gases trocknen, wobei das Gas zuerst den ersten Mitteln zum Trocknen des Gases zugeführt wird und dann den Mitteln zur Reinigung des Gases wobei
- eine erste Trocknereinheit mit den ersten Mitteln zum Trocknen und eine der ersten Trocknereinheit in Strömungsrichtung des Gases nachgeschaltete Reinigerstufe mit den Mitteln zur Reinigung des Gases vorgesehen sind, wobei die Reinigerstufe eine zweite Trocknereinheit mit den zweiten Mitteln zum Trocknen aufweist, wobei die Reinigerstufe einen Behälter aufweist und in dem Behälter sowohl die Mittel zur Reinigung des Gases als auch die zweiten Mittel zum Trocknen angeordnet sind, und
- die Reinigerstufe als Mittel zur Reinigung des Gases Aktivkohle aufweist,
**dadurch gekennzeichnet, dass**
- die zweiten Mittel zum Trocknen mit der Aktivkohle in der Reinigerstufe ein Mischbett bilden, so dass sie die Aktivkohle trocknen, und
- das Volumen der zweiten Mittel zum Trocknen der zweiten Trocknereinheit mindestens einem Viertel des Volumens der Aktivkohle der Reinigerstufe beträgt.

2. Vorrichtung gemäß Anspruch 1, **dadurch gekennzeichnet, dass** die erste Trocknereinheit mindestens einen Trockenmittelbehälter (4, 5) mit einem hygroskopischen Trockenmittel umfasst.

3. Vorrichtung gemäß Anspruch 1, **dadurch gekennzeichnet, dass** die erste Trocknereinheit mindestens zwei Trockenmittelbehälter (4, 5) umfasst, die wechselweise mit einem Gaseinlass und einer Zufuhrleitung zu der Reinigerstufe verbindbar sind.

4. Vorrichtung gemäß einem der vorhergehenden Ansprüche, **dadurch gekennzeichnet, dass** die zweite Trocknereinheit ein hygroskopisches Trockenmittel umfasst.

## Claims

1. Device for drying a gas, comprising
- first gas drying agents, to which the gas is fed to be dried, and
- gas cleaning agents, to which the gas is fed to be cleaned, and
- second drying agents which are arranged so that they dry the gas cleaning agents, the gas being firstly fed to the first gas drying agents and then to the gas cleaning agents, wherein
- a first dryer unit having the first drying agents and a cleaner stage, connected downstream of the first dryer unit in the direction of flow of the gas, having the gas cleaning agents are provided, wherein the cleaner stage has a second dryer unit with the second drying agents, the cleaner stage having a container, and the gas cleaning agents as well as the second drying agents being arranged in the container, and
- the cleaner stage has activated carbon as the gas cleaning agent,
**characterised in that**
- the second drying agents form a mixed bed with the activated carbon in the cleaner stage so that they dry the activated carbon, and
- the volume of the second drying agents of the second dryer unit amounts to at least one quarter of the volume of the activated carbon of the cleaner stage.

2. Device according to claim 1, **characterised in that** the first dryer unit comprises at least one drying agent container (4, 5) with a hygroscopic drying agent.

3. Device according to claim 1, **characterised in that** the first dryer unit comprises at least two drying agent containers (4, 5) which can be connected alternately to a gas inlet and to a feed line to the cleaner stage.

4. Device according to any one of the preceding claims, **characterised in that** the second dryer unit comprises a hygroscopic drying agent.

## Revendications

1. Dispositif de séchage d'un gaz comprenant
- des premiers moyens de séchage du gaz, auxquels le gaz est amené pour son séchage,
et
- des moyens de purification du gaz, auxquels le gaz est amené pour sa purification, et
- des deuxièmes moyens de séchage qui sont disposés de manière à sécher les moyens de purification du gaz, le gaz étant amené d'abord aux premiers moyens de séchage du gaz et ensuite aux moyens de purification du gaz,
- une première unité de séchage présentant les premiers moyens de séchage et un étage de purification présentant les moyens de purification du gaz, placé en aval de la première unité de séchage dans la direction d'écoulement du gaz, étant prévus, l'étage de purification comportant une deuxième unité de séchage présentant les deuxièmes moyens de séchage, l'étage de purification comportant un récipient dans lequel aussi bien les moyens de purification du gaz que les deuxièmes moyens de séchage sont disposés, et
- l'étage de purification comportant du charbon actif en tant que moyen de purification du gaz,
**caractérisé en ce que**
- les deuxièmes moyens de séchage forment un lit mixte avec le charbon actif dans l'étage de purification, de sorte qu'ils sèchent le charbon actif, et
- le volume des deuxièmes moyens de séchage de la deuxième unité de séchage représente au moins un quart du volume du charbon actif de l'étage de purification.

2. Dispositif selon la revendication 1, **caractérisé en ce que** la première unité de séchage comprend au moins un récipient d'agent de séchage (4, 5) contenant un agent de séchage hygroscopique.

3. Dispositif selon la revendication 1, **caractérisé en ce que** la première unité de séchage comprend au moins deux récipients d'agent de séchage (4, 5) qui peuvent être reliés alternativement à une entrée de gaz et à une conduite d'alimentation allant à l'étage de purification.

4. Dispositif selon l'une des revendications précédentes, **caractérisé en ce que** la deuxième unité de séchage comprend un agent de séchage hygroscopique.
